# EUROPÄISCHE PATENTSCHRIFT

(11) **EP 3 493 652 B1**
(45) Veröffentlichungstag und Bekanntmachung des Hinweises auf die Patenterteilung: **08.07.2020**
(21) Anmeldenummer: 18206390.9
(22) Anmeldetag: 15.11.2018
(51) Int. Cl.: H05B 47/10

(54) **AUTOMATISCHE ANPASSUNG DER LICHTFARBE VON LEUCHTEN**
AUTOMATIC ADAPTATION OF THE LIGHT COLOUR OF LIGHTS
AJUSTEMENT AUTOMATIQUE DE LA COULEUR DE LUMIÈRE DES LUMINAIRES

(30) Priorität: 01.12.2017 DE 102017221671; 13.03.2018 DE 102018105706
(43) Veröffentlichungstag der Anmeldung: 05.06.2019
(73) Patentinhaber: Zumtobel Lighting GmbH, 6850 Dornbirn (AT); Zumtobel Group AG, 6850 Dornbirn (AT)
(72) Erfinder: Jelicic, Vana, 6850 Dornbirn (AT); Keller, Katharina, 88131 Lindau (DE); Siegel, Martin, 88097 Eriskirch (DE); Zuniga Zamalloa, Marc Antonio, 2828 CD Delft (NL); Ruiling, Zhang, 2828 CD Delft (NL)
(74) Vertreter: Beder, Jens

(56) Entgegenhaltungen:
- WO-A1-2015/195645
- WO-A2-2014/016730
- DE-A1-102014 104 174
- JP-A- 2009 028 491

## Beschreibung

Die vorliegende Erfindung betrifft eine Vorrichtung und ein Verfahren zum Steuern der Lichtfarbe des von einer Leuchte abgegebenen Lichts sowie ein Beleuchtungssystem mit einer solchen Vorrichtung. Die Erfindung betrifft insbesondere die automatische Anpassung der Lichtfarbe an einen Wechsel von zu beleuchtenden Objekten.

Bei vielen Anwendungen hängt die Wahl der Lichtfarbe von dem zu beleuchtenden Objekt ab. So sollen die Farben von in Geschäften angebotenen Waren durch die Beleuchtung hervorgehoben werden, wobei bei Waren mit vermehrt roten Farben eine Beleuchtung mit einer warmen Lichtfarbe gewählt wird und bei Waren mit vielen Blautönen dagegen eine kalte Lichtfarbe bevorzugt wird.

Mit Leuchten, welche eine stufenweise oder stufenlose Änderung der Lichtfarbe des von ihr abgegebenen Lichts erlauben, kann die Beleuchtung an ein neues Sortiment oder an eine neue Anordnung der Waren manuell oder automatisch angepasst werden.

Die WO2014/016730A2 offenbart ein solches automatisches Beleuchtungssystem, bei dem die Farbe und Form des zu beleuchtenden Objekts mittels Sensoren erfasst wird und eine Steuereinrichtung das Objekt auf der Grundlage der erfassten Farbe und Form identifiziert und die Lichtfarbe der das Objekt anstrahlenden Leuchte entsprechend dem identifizierten Objekt steuert. Die Genauigkeit bei der Wahl der zu setzenden Lichtfarbe hängt bei dem in der WO2014/016730 A2 offenbarten Beleuchtungssystem von der korrekten Identifizierung des Objekts ab. Zudem müssen Informationen zur Identifizierung aller, für eine Beleuchtung in Frage kommenden Objekte bereitgestellt werden. Die Erfassung und Auswertung verschiedener Objektmerkmale machen das System komplex und teuer. JP2009028491 offenbart eine Beleuchtungsvorrichtung, bei der ein Zielobjekt von einer Leuchte angestrahlt wird. Ein Farbsensor ermittelt den Farbton des beleuchteten Objekts und steuert die Lichtfarbe der Leuchte entsprechend.

Der Erfindung liegt die Aufgabe zugrunde, Vorrichtung und Verfahren anzugeben, die die beschriebenen Probleme verringern. Aufgabe ist es insbesondere, eine Vorrichtung und ein Verfahren zum Steuern der Lichtfarbe des von einer Leuchte abgegebenen Lichts sowie ein Beleuchtungssystem bereitzustellen, die in einfacher und günstiger Weise eine automatische Anpassung der Lichtfarbe an das zu beleuchtende Objekt erlauben.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung weist die Vorrichtung zumindest einen Farbsensor und eine Steuereinrichtung auf, wobei der Farbsensor ein Farbsignal von zumindest einem von der Leuchte beleuchteten Zielobjekt erzeugt und die Steuereinrichtung einem Farbwert des Farbsignals eine Lichtfarbe zuordnet und die Leuchte auf der Grundlage der zugeordneten Lichtfarbe steuert. Die Steuereinrichtung ist dabei dazu ausgelegt, die Anwesenheit eines Fremdobjekts im Erfassungsbereich des Farbsensors auf der Grundlage einer Änderung des Farbsignals zu bestimmen und eine Änderung der Lichtfarbe zu unterdrücken, wenn die Anwesenheit eines Fremdobjekts bestimmt wurde.

Somit ist eine genaue Identifizierung des Zielobjekts nicht nötig. Die Lichtfarbe wird automatisch einer Änderung der Farbe des Zielobjekts angepasst, wobei Farbänderungen von im Erfassungsbereich temporär befindlichen Fremdobjekten nicht berücksichtigt werden.

Zielobjekte können in Regalen oder auf Tischen platzierte Waren und Fremdobjekte, Personen und/oder Einkaufswagen sein.

Der Farbsensor kann ein kostengünstiger nicht-bildgebender Farbsensor sein.

Farbänderungen von geringer Zeitdauer deuten auf sich im Erfassungsbereich temporär aufhaltende Personen und können unterdrückt bzw. herausgefiltert werden.

Alternativ oder zusätzlich können Farbänderungen, welche über eine längere Zeitdauer bestand haben und beispielsweise von in einem Regal oder auf einem Tisch neu positionierter Ware verursacht worden sind, bei der Steuerung bzw. Regelung der Lichtfarbe berücksichtigt werden. Hierzu kann die Steuereinrichtung bestimmen, ob für eine vorgegebene Zeitdauer keine weiteren Farbwertänderungen vorliegen oder die Farbwertänderungen während der Zeitdauer einen vorgegebenen Schwellenwert nicht übersteigen.

Die Zeitdauer und/oder der Schwellenwert können vom Hersteller oder Nutzer eingegeben und gespeichert werden. Zusätzlich kann die Steuereinrichtung die Zeitdauer und/oder den Schwellenwert automatisch in Abhängigkeit von der Tageszeit und/oder dem Wochentag setzen.

Die Genauigkeit der Filterung kann erhöht werden, wenn die individuelle Farbänderung, welche in dem Erfassungsbereich befindliche oder eintretende Fremdobjekte verursachen, bekannt ist. Diese von beispielsweise Personen mit und ohne Einkaufwagen verursachten Änderungen können für eine erneute Erfassung gespeichert und/oder an Vorrichtungen, die einen benachbarten Erfassungsbereich überwachen bzw. beleuchten, übermittelt werden.

Hierfür kann die Steuereinrichtung dazu ausgelegt sein, Fremdobjekte, wie Personen oder Personengruppen, mit unterschiedlichen Farben und/oder Farbmustern als Fremdobjekte auf der Grundlage des Farbsignals zu identifizieren, wobei einer Personen oder Personengruppe ein bestimmter Farbwert und/oder eine oder mehrere bestimmte Farbwertänderungen zugeordnet sind.

Die Genauigkeit der Filterung kann weiter erhöht werden, wenn die Bewegung der Fremdobjekte bezüglich der Erfassungsbereiche erkannt oder vorhergesagt wird. Die Vorrichtung kann hierfür zumindest einen zweiten Farbsensor oder eine Einrichtung zum Empfangen eines von einem zweiten Farbsensor erzeugten Farbsignals aufweisen, wobei der Erfassungsbereich des ersten Farbsensors und der Erfassungsbereich des zweiten Farbsensors zumindest teilweise unterschiedlich sind und die Steuereinrichtung dazu ausgelegt ist, die Bewegung einer Person oder Personengruppe auf der Grundlage des zeitlichen Auftretens eines Farbwerts und/oder einer Farbwertänderung in den Erfassungsbereichen zu ermitteln.

Zusätzlich kann die Steuereinrichtung dazu ausgelegt sein, jeder identifizierten Person oder Personengruppe einen eindeutigen Namen zuzuordnen.

Ein Beleuchtungssystem gemäß der vorliegenden Erfindung besteht aus zumindest zwei Leuchten, wobei jede Leuchte eine der oben beschriebenen Vorrichtungen zum Steuern der Lichtfarbe des von der Leuchte abgegebenen Lichts aufweist und die Steuereinrichtung der einen Leuchte dazu ausgelegt ist, den Namen und/oder eine Information zur Identifikation der dem Namen zugeordneten Person bzw. Personengruppe an die andere Leuchte zu übermitteln.

Die Identifikationsinformation kann den Farbwert und/oder die Farbwertänderungen anzeigen, wobei jede Leuchte dazu ausgelegt ist:
- den übermittelten Namen und die übermittelte Identifikationsinformation zu speichern,
- bei einer Identifizierung einer Person bzw. Personengruppe im Erfassungsbereich auf der Grundlage der gespeicherten Identifikationsinformation zu bestimmen, ob der Person bzw. Personengruppe bereits ein Name zugeordnet ist,
- der Person bzw. Personengruppe einen eindeutigen Namen zuzuordnen und diesen zusammen mit der Identifikationsinformation an die andere Leuchte (S1..S4) zu übermitteln, wenn der Person noch kein Name zugeordnet ist, und
- den bereits zugeordneten bzw. den neuen Namen an die Ermittlungseinrichtung zu übermitteln.

Gemäß der vorliegenden Erfindung weist ein Verfahren zum Steuern der Lichtfarbe des von zumindest einer Leuchte abgegebenen Lichts die Schritte:
- Erzeugen eines Farbsignals mit einem Farbsensor von zumindest einem von der Leuchte beleuchteten Zielobjekt,
- Zuordnen einer Zielobjekt-Lichtfarbe zu einem von dem Farbsignal angezeigten Farbwert, und
- Steuern der Lichtfarbe des von der Leuchte abgegebenen Lichts auf der Grundlage der Zielobjekt-Lichtfarbe auf, wobei eine Änderung der Lichtfarbe unterdrückt wird bzw. nicht erfolgt, wenn die Anwesenheit eines Fremdobjekts im Erfassungsbereich des Farbsensors auf der Grundlage einer Änderung des Farbsignals ermittelt wird.

Nachfolgend wird die Erfindung anhand der beiliegenden Zeichnungen näher erläutert. Es zeigen:
Fig. 1 eine Leuchte nach einem Ausführungsbeispiel gemäß der vorliegenden Erfindung,
Fig. 2 ein Beleuchtungssystem nach einem Ausführungsbeispiel gemäß der vorliegenden Erfindung,
Fig. 3 eine Steuerungsvorrichtung nach einem Ausführungsbeispiel gemäß der vorliegenden Erfindung, und
Fig. 4 ein vereinfachtes Diagramm zur Darstellung des Verfahrens.

Komponenten mit gleichen Funktionen sind in den Figuren mit gleichen Bezugszeichen gekennzeichnet.

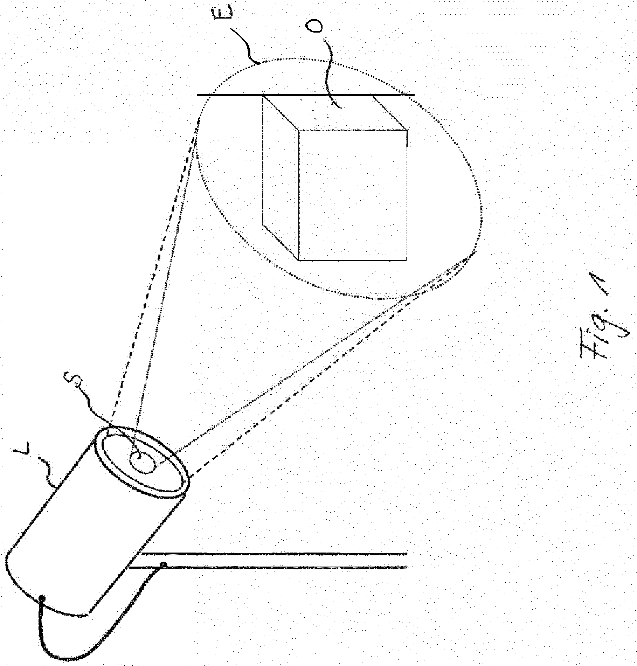

Fig. 1 zeigt eine Leuchte L mit einem Farbsensor S, die ein Objekt 0 (Zielobjekt) anstrahlt. Die Farbe des von der Leuchte L abgegebenen Lichts ist entsprechend der Farbe des Objekts 0, welche mittels dem Farbsensor S ermittelt wird, automatisch gewählt. Die Wahl der Lichtfarbe kann mittels einer Tabelle oder einer Formel, die jeder ermittelten Objektfarbe eine Lichtfarbe zuordnet, erfolgen. Die Tabelle und die Formel können vom Hersteller oder Nutzer vorgegeben werden.

Der Farbsensor 1 ist in dem gezeigten Beispiel in der Leuchte L integriert und im Bereich des Lichtaustritts der Leuchte L so angeordnet, dass der Erfassungsbereich E des Farbsensors S sich mit dem Ausleuchtungsbereich der Leuchte deckt. Der Farbsensor S kann ein nicht-bildgebender Sensor sein, der seinen Erfassungsbereich E abtastet und ein entsprechendes Farbsignal, das einen momentanen Farbwert für die Farben Rot, Grün und Blau anzeigt, ausgibt. Der ausgegebene Farbwert hängt dabei von der Farbe oder dem Farbmuster des Objekts 0 und dessen im Erfassungsbereich E befindlichen Umgebung ab. Das Objekt 0 kann während der Bestimmung des Farbwerts von der Leuchte L angestrahlt werden. Bei heller Umgebung ist es jedoch auch möglich Farbmessungen bei ausgeschaltetem Licht durchzuführen, um die Lichtfarbe für das nächste Einschalten zu bestimmen.

Gemäß der vorliegenden Erfindung wird die Lichtfarbe automatisch der Farbe des Objekts 0 angepasst, wobei ein Austausch des Objekts 0 durch ein Objekt 0 mit einer anderen Farbe oder einem anderen Farbmuster eine Änderung/Anpassung der Lichtfarbe bewirkt. Dagegen werden Farbänderungen, die Fremdobjekte hervorrufen, welche sich im Gegensatz zum Ziel-Objekt 0 meist nur kurzzeitig im Erfassungsbereich E aufhalten, herausgefiltert oder nicht berücksichtigt. Bei der Filterung werden hochfrequente, sich zeitlich schnell ändernde Farbwerte und/oder von einem erkannten Fremdobjekt verfälschte Farbwerte herausgefiltert.

Fremdobjekte können Personen sein, die jedes Mal, wenn sie sich im Erfassungsbereich E befinden oder in ihn eintreten einen bestimmten Farbwert und/oder eine bestimmte Farbänderung (Farbfolge und Dynamik) hervorrufen, mittels der sie wiedererkennbar sind. Dabei bewirken unterschiedlich farbige Fremdobjekte/Personen unterschiedliche Farbwerte bzw. Farbänderungen, was sie untereinander unterscheidbar und identifizierbar macht.

Eine Identifizierung mittels solcher Farbwerte/Farbänderungen erlaubt eine sichere Ermittlung der Anwesenheit von Fremdobjekten, selbst wenn diese sich über eine längere Zeitdauer in dem Erfassungsbereich E aufhalten und erlaubt eine Bestimmung oder Vorhersage der Bewegung von Fremdobjekten durch mehrere Erfassungs-/Beleuchtungsbereiche in einem Beleuchtungssystem.

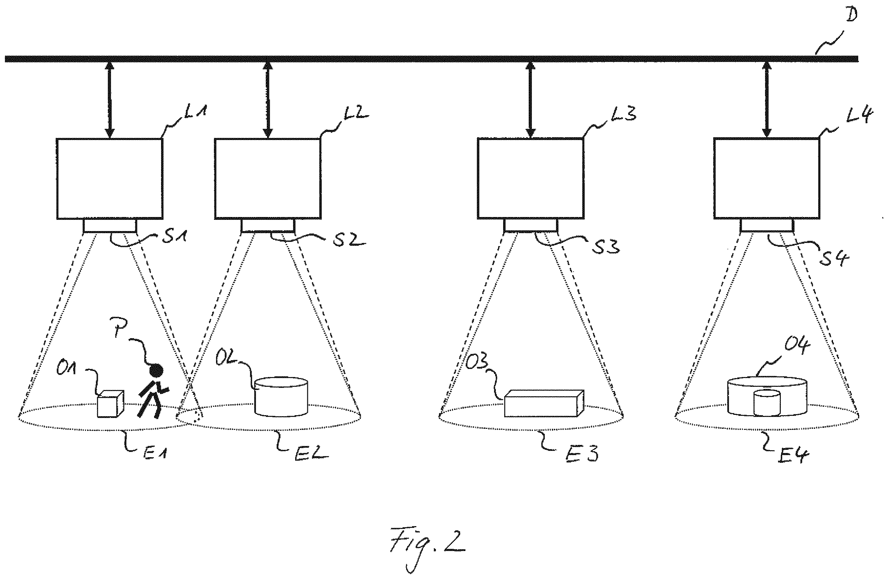

Fig. 2 zeigt eine vereinfachte Schaltung eines solchen Beleuchtungssystems, das vier über einen Datenbus D miteinander verbundene Leuchten L1 bis L4 aufweist. Die Leuchten L1 bis L4 beleuchten jeweils ein anderes Ziel-Objekt 01 bis 04 und passen die Lichtfarbe der des von ihnen abgegebenen Lichts an die jeweilige Objektfarbe an. Hierzu ist in jeder Leuchte L1 bis L4 ein Farbsensor S1 bis S4 vorgesehen, der einen der Farbe des jeweiligen Erfassungsbereichs E1..E4 entsprechenden Farbwert oder ein die Farbe anzeigendes Signal ausgibt. Jeder Leuchte L1 bis L4 ist eine eindeutige Busadresse zugeordnet.

In dem Beleuchtungssystem weist, wie in Fig. 1 gezeigt, jede Leuchte L1 bis L4 einen Farbsensor S1 bis S4 und eine Steuereinrichtung zum Steuern der Farbtemperatur auf. Es ist jedoch auch möglich nur den Farbsensor S1 bis S4 in eine Leuchte L1 bis L4 zu integrieren und eine zentrale an dem Datenbus D angekoppelte Steuereinrichtung vorzusehen, welche die Farbsignale der Farbsensoren S1 bis S4 über den Datenbus D empfängt und die Leuchten L1 bis L4 steuert. Eine solche zentrale Steuereinrichtung kann ein Personal Computer oder Teil einer zentralen Gebäudesteuerung sein.

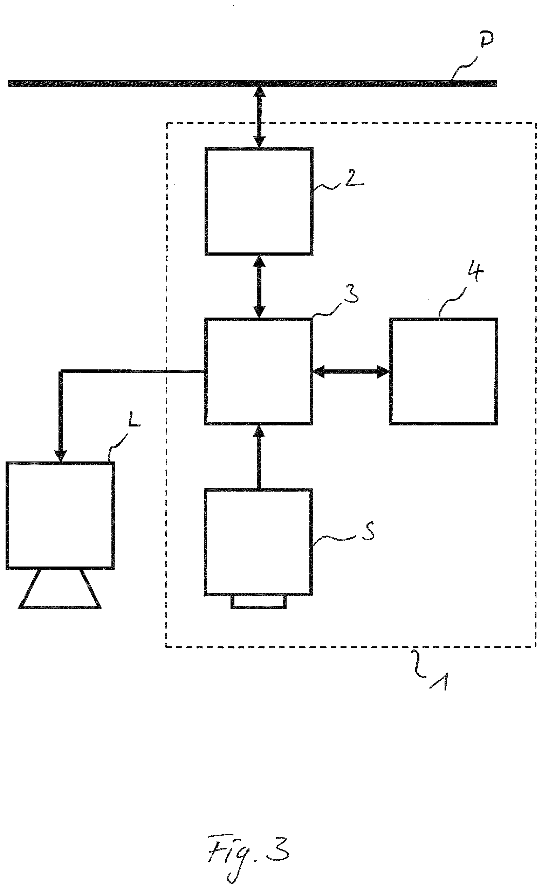

Alternativ kann, wie in Fig. 3 gezeigt, eine von der Leuchte L1 bis L4 separate Steuerungsvorrichtung 1 vorgesehen sein, welche zumindest einen Erfassungsbereich E1 bis E4 abtastet und Steuersignale an zumindest eine Leuchte L1 bis L4 abgibt. Die Steuerungsvorrichtung 1 weist eine mit dem Datenbus D verbindbare Ein- und Ausgabeeinrichtung 2, eine Steuereinrichtung 3, eine Speichereinrichtung 4 und einen Farbsensor S auf. Die Komponenten der gezeigten Steuerungsvorrichtung 1 können jedoch auch in einer Leuchte L1 bis L4 integriert sein.

Die Speichereinrichtung 4 speichert die Tabelle oder Formel, die jeder ermittelten Objektfarbe eine Lichtfarbe zuordnet. Der Farbsensor S tastet seinen Erfassungsbereich E1..E4 ab und gibt ein entsprechendes Farbsignal (Farbwert) an die Steuereinrichtung 3 aus, welche mittels der gespeicherten Tabelle bzw. Formel eine Ziel-Lichtfarbe bestimmt und entsprechende Steuersignale an die Leuchte L sendet. Zudem ermittelt die Steuereinrichtung 3 auf der Grundlage der Sensorsignale, ob sich ein Fremdobjekt in dem Erfassungsbereich E1..E4 befindet und unterdrückt eine Änderung/Anpassnug der Lichtfarbe, wenn die Anwesenheit eines Fremdobjekts bestimmt wurde. Für eine Erkennung eines Fremdobjekts analysiert die Steuereinrichtung 3 den zeitlichen Verlauf der Farbänderungen in dem von dem Farbsensor S ausgegebenen Farbsignal und bestimmt, ob der Farbwert innerhalb einer bestimmten Zeit wieder einen Farbwert annimmt, auf dessen Grundlage die aktuell gesetzte Lichtfarbe ermittelt wurde.

Alternativ oder zusätzlich kann die Steuereinrichtung 3 die Abwesenheit eines Fremdobjekts bestimmen, wenn innerhalb einer vorgegebenen Zeitdauer keine Farbwertänderungen vorliegen oder die Farbwertänderungen während der Zeitdauer einen vorgegebenen Schwellenwert nicht übersteigen.

Ein in einem Erfassungsbereich E1 bis E4 befindliches Fremdobjekt, das eine Farbe oder ein Farbmuster aufweist, das von dem Ziel-Objekt 01 bis 04 abweicht, bewirkt eine Änderung in dem von dem Farbsensor S ausgegebenen Signal. So verschiebt sich der Farbwert durch die andere Farbe bzw. das andere Farbmuster des Fremdobjekts. Mit einer Analyse der Verschiebung können dem Fremdobjekt eindeutige Farbinformationen zugeordnet werden, die anzeigen, wie sich der Farbwert in jedem Erfassungsbereich E1..E4 mit dem Fremdobjekt ändern würde, und mittels denen das Fremdobjekt in einem Erfassungsbereich E1..E4 eindeutig identifizierbar ist. Zusätzlich können Muster im Zeit- und/oder Frequenzbereich detektiert werden, welche das Fremdobjekt in einem Erfassungsbereich E1..E4 erzeugt.

Diese Informationen können von der Steuereinrichtung 3 zur Identifizierung des Fremdobjekts in der Speichereinrichtung 4 gespeichert und über den Datenbus D an die anderen Steuervorrichtungen 1 bzw. die anderen Leuchten L gesendet werden, welche die Informationen speichern. Mit den gespeicherten Identifikationsinformationen ist das Fremdobjekt dann in jedem Erfassungsbereich E1..E4 identifizierbar. Die Erstellung von Identifikationsinformationen erfolgt für jedes in einem Erfassungsbereich E1..E4 erstmalig erkannte Fremdobjekt. Jedem gespeicherten/registriertem Fremdobjekt kann zudem ein eindeutiger Name zugeordnet werden.

In dem in Fig. 2 gezeigten Beleuchtungssystem befindet sich in dem Erfassungsbereich E1 eine Fremdobjekt P, eine Person, deren Farbe oder Farbmuster eine Änderung in dem von dem Farbsensor S1 ausgegebenen Farbsignal bewirkt. Die Steuereinrichtung 3 analysiert die Änderung und vergleicht die durch die Analyse erhaltenen Farbinformationen mit den gespeicherten Identifikationsinformationen. Ist das Fremdobjekt P bereits registriert, sendet die Steuereinrichtung 3 den Namen des Fremdobjekts P zusammen mit der Busadresse der Leuchte L1 an die anderen Leuchten L2 bis L4 bzw. die anderen Steuervorrichtungen. Ist das Fremdobjekt P dagegen nicht registriert, analysiert die Steuereinrichtung 3 den zeitlichen Verlauf der Farbänderungen und bestimmt, ob sich ein Fremdobjekt P in dem Erfassungsbereich E1 befindet. Wird kein Fremdobjekt P erkannt, erfolgt eine Anpassung der Lichtfarbe. Befindet sich dagegen ein Fremdobjekt P in dem Erfassungsbereich E1, erzeugt die Steuereinrichtung 3 Identifikationsinformationen für das erstmalig erkannte Fremdobjekt P, speichert und sendet diese, wie oben beschrieben, an die anderen Leuchten L2 bis L4.

Bewegt sich das Fremdobjekt P weiter zum Erfassungsbereich E2, wird es dort an Hand der Identifikationsinformationen identifiziert, wobei über die Reihenfolge der Erfassungen in den Erfassungsbereichen E1 und E2 und die Zeiten der Erfassungen sowohl die Bewegungsrichtung als auch die Bewegungsgeschwindigkeit des Fremdobjekts P ermittelt werden kann. Diese Informationen können für eine Vorhersage der Anwesenheit des Fremdobjekts P in einem Erfassungsbereich E1 bis E4 und/oder von anderen Gebäudetechnikkomponenten genutzt werden. Alternativ oder zusätzlich können diese Daten zur Auswertung oder Weiterverarbeitung an eine mobile Einrichtung, wie ein Tablet oder Smartphone, kabelgebunden oder kabellos übertagen werden.

Die erstmalige Detektion von Fremdobjekten P kann im Normalbetrieb oder in einem Lernbetrieb erfolgen. Im Lernbetrieb bewegt sich ein Fremdobjekt P beispielsweise mehrmals durch einen Erfassungsbereich E1 bis E4, welches der Steuereinrichtung 3 bzw. der zentralen Steuereinrichtung 3 angezeigt wird. Diese erlernt und speichert dann das zu diesem Fremdobjekt P gehörende Muster der Farbänderung.

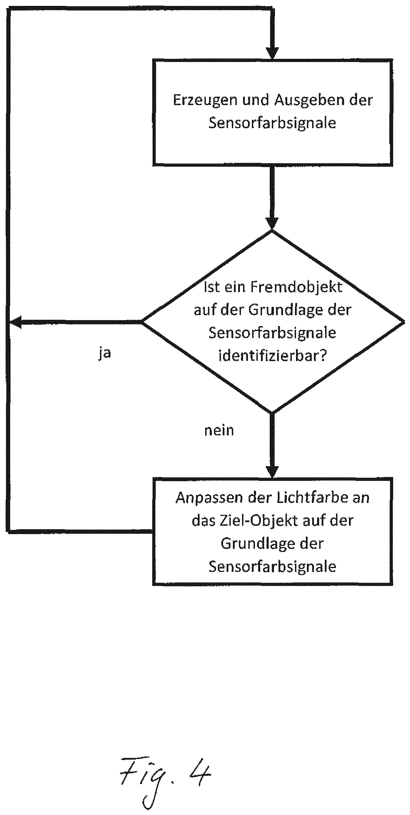

In Fig. 4 ist ein stark vereinfachtes Ablaufdiagramm dargestellt, das die einzelnen Schritte bei der Durchführung des oben ausführlich beschriebenen Verfahrens zeigt.

## Patentansprüche

1. Vorrichtung zum Steuern der Lichtfarbe des von zumindest einer Leuchte (L) abgegebenen Lichts, aufweisend
zumindest einen Farbsensor (S), der dazu ausgelegt ist, ein Farbsignal ausgehend von zumindest einem von der Leuchte (L1..L4) beleuchteten Zielobjekt (O) zu erzeugen, und
einer Steuereinrichtung (3), die dazu ausgelegt ist, dem Farbwert des Farbsignals eine Lichtfarbe zuzuordnen und die Leuchte (L) auf der Grundlage der zugeordneten Lichtfarbe zu steuern, **dadurch gekennzeichnet, dass**
die Steuereinrichtung (3) dazu ausgelegt ist, die Anwesenheit eines Fremdobjekts (P) im Erfassungsbereich (E) des Farbsensors (S) auf der Grundlage einer Änderung des Farbsignals zu bestimmen und eine Änderung der Lichtfarbe zu unterdrücken, wenn die Anwesenheit eines Fremdobjekts (P) bestimmt wurde, wobei
die Steuereinrichtung (3) dazu ausgelegt ist, für die Bestimmung der Anwesenheit des Fremdobjekts (P) den zeitlichen Verlauf von Farbänderungen in dem von dem Farbsensor (S) ausgegebenen Farbsignal zu analysieren und zu bestimmen, ob der Farbwert innerhalb einer bestimmten Zeit wieder einen Farbwert annimmt, auf dessen Grundlage eine aktuell gesetzte Lichtfarbe ermittelt wurde; und/oder
die Steuereinrichtung (3) dazu ausgelegt ist, zu bestimmen, dass sich kein Fremdobjekt (P) im Erfassungsbereich (E) befindet, wenn für eine bestimmte Zeitdauer Änderungen des Farbwerts einen bestimmten Schwellenwert nicht übersteigen; und/oder
die Steuereinrichtung (3) dazu ausgelegt ist, Fremdobjekte (P), insbesondere Personen, mit unterschiedlichen Farben und/oder Farbmustern auf der Grundlage des Farbsignals zu identifizieren, wobei einer Person oder Personengruppe ein bestimmter Farbwert und/oder eine oder mehrere bestimmte Farbwertänderungen zugeordnet sind.

2. Vorrichtung nach Anspruch 1, wobei
der Farbsensor (S) ein nicht-bildgebender Farbsensor ist.

3. Vorrichtung nach Anspruch 1 oder 2, wobei
die Steuereinrichtung (3) dazu ausgelegt ist, die Zeitdauer und/oder den Schwellenwert in Abhängigkeit von der Tageszeit und/oder dem Wochentag zu setzen.

4. Vorrichtung nach einem der Ansprüche 1 bis 3, wobei
die Vorrichtung (1) zumindest einen zweiten Farbsensor (S) oder eine Einrichtung (4) zum Empfangen eines von einem zweiten Farbsensor (S) erzeugten Farbsignals aufweist, wobei
der Erfassungsbereich (E) des ersten Farbsensors (S) und der Erfassungsbereich (E) des zweiten Farbsensors (S) zumindest teilweise unterschiedlich sind; und
die Steuereinrichtung (3) dazu ausgelegt ist, die Bewegung einer Person oder Personengruppe auf der Grundlage des zeitlichen Auftretens eines Farbwerts und/oder einer Farbwertänderung in den Erfassungsbereichen (E) zu bestimmen.

5. Vorrichtung nach einem der Ansprüche 1 bis 4, wobei
die Steuereinrichtung (3) dazu ausgelegt ist, mehrere Personen oder Personengruppen zu identifizieren und jeder identifizierten Person oder Personengruppe einen eindeutigen Namen zuzuordnen.

6. Beleuchtungssystem mit zumindest zwei Leuchten, wobei
jede Leuchte (L) eine Vorrichtung (1) nach Anspruch 5 zum Steuern der Lichtfarbe des von der Leuchte (L) abgegebenen Lichts aufweist und die Steuereinrichtung (3) der einen Leuchte (L) dazu ausgelegt ist, den Namen und/oder eine Information zur Identifikation der dem Namen zugeordneten Person (P) bzw. Personengruppe an die andere Leuchte (L) zu übermitteln.

7. Beleuchtungssystem nach Anspruch 6, wobei
die Identifikationsinformation den Farbwert und/oder die Farbwertänderung bzw. die Farbwertänderungen bzw. anzeigt, und jede Leuchte (L) dazu ausgelegt ist:
- den übermittelten Namen und die übermittelte Identifikationsinformation zu speichern,
- bei einer Identifizierung einer Person bzw. Personengruppe im Erfassungsbereich (E) auf der Grundlage der gespeicherten Identifikationsinformation zu bestimmen, ob der Person bzw. Personengruppe bereits ein Name zugeordnet ist,
- der Person (P) bzw. Personengruppe einen eindeutigen Namen zuzuordnen und diesen zusammen mit der Identifikationsinformation an die andere Leuchte (L) zu übermitteln, wenn der Person noch kein Name zugeordnet ist, und
- den bereits zugeordneten bzw. den neuen Namen an die andere Leuchte (L) zu übermitteln.

8. Verfahren zum Steuern der Lichtfarbe des von zumindest einer Leuchte abgegebenen Lichts, mit den Schritten:
Erzeugen eines Farbsignals ausgehend von zumindest einem von der Leuchte (L) beleuchteten Zielobjekt (O) mit einem Farbsensor (S),
Zuordnen einer Zielobjekt-Lichtfarbe zu einem von dem Farbsignal angezeigten Farbwert, und
Steuern der Lichtfarbe des von der Leuchte (L) angegebenen Lichts auf der Grundlage der Zielobjekt-Lichtfarbe,
**gekennzeichnet durch**
Ermitteln der Anwesenheit eines Fremdobjekts (P) im Erfassungsbereich (E) des Farbsensors (S) auf der Grundlage einer Änderung des Farbsignals, und
Unterdrücken einer Änderung der Lichtfarbe, wenn die Anwesenheit eines Fremdobjekts (P) ermittelt wurde, wobei
für die Ermittlung der Anwesenheit des Fremdobjekts (P) der zeitliche Verlauf von Farbänderungen in dem von dem Farbsensor (S) ausgegebenen Farbsignal analysiert und bestimmt wird, ob der Farbwert innerhalb einer bestimmten Zeit wieder einen Farbwert annimmt, auf dessen Grundlage
eine aktuell gesetzte Lichtfarbe ermittelt wurde; und/oder bestimmt wird, dass sich kein Fremdobjekt (P) im Erfassungsbereich (E) befindet, wenn für eine bestimmte Zeitdauer Änderungen des Farbwerts einen bestimmten Schwellenwert nicht übersteigen; und/oder
Fremdobjekte (P), insbesondere Personen, mit unterschiedlichen Farben und/oder Farbmustern auf der Grundlage des Farbsignals identifiziert werden, wobei einer Person oder Personengruppe ein bestimmter Farbwert und/oder eine oder mehrere bestimmte Farbwertänderungen zugeordnet sind.

## Claims

1. Device for controlling the light color of the light emitted by at least one luminaire (L), having
at least one color sensor (S), which is designed to generate a color signal starting from at least one target object (O) illuminated by the luminaire (L1..L4), and
a control apparatus (3), which is designed to assign a light color to the color value of the color signal and to control the luminaire (L) on the basis of the assigned light color,
**characterized in that**
the control apparatus (3) is designed to determine the presence of a foreign object (P) in the detection range (E) of the color sensor (S) on the basis of a change in the color signal and to suppress a change in the light color when the presence of a foreign object (P) has been determined, wherein
the control apparatus (3) is designed to analyze the temporal course of color changes in the color signal output by the color sensor (S) for determining the presence of the foreign object (P) and to determine whether the color value again, within a specific time, assumes a color value, on the basis of which a currently set light color has been ascertained; and/or
the control apparatus (3) is designed to determine that no foreign object (P) is located in the detection range (E) when changes in the color value do not exceed a specific threshold value for a specific period of time; and/or
the control apparatus (3) is designed to identify foreign objects (P), in particular people, having different colors and/or color patterns on the basis of the color signal, wherein a specific color value and/or one or more specific color value changes are assigned to one person or group of people.

2. Device according to Claim 1, wherein
the color sensor (S) is a non-imaging color sensor.

3. Device according to Claim 1 or 2, wherein
the control apparatus (3) is designed to set the period of time and/or the threshold value as a function of the time of day and/or the day of the week.

4. Device according to any one of Claims 1 to 3, wherein
the device (1) has at least one second color sensor (S) or an apparatus (4) for receiving a color signal generated by a second color sensor (S), wherein
the detection range (E) of the first color sensor (S) and the detection range (E) of the second color sensor (S) are at least partially different; and
the control apparatus (3) is designed to determine the movement of one person or group of people on the basis of the temporal occurrence of a color value and/or a color value change in the detection ranges (E).

5. Device according to any one of Claims 1 to 4, wherein
the control apparatus (3) is designed to identify a plurality of persons or groups of people and to assign a unique name to each identified person or group of people.

6. Illumination system with at least two luminaires, wherein
each luminaire (L) has a device (1) according to Claim 5 for controlling the light color of the light emitted by the luminaire (L), and the control apparatus (3) of the one luminaire (L) is designed to transmit the name and/or information for identification of the person (P) or group of people assigned to the name to the other luminaire (L).

7. Illumination system according to Claim 6, wherein
the identification information displays the color value and/or the color value change or the color value changes, and each luminaire (L) is designed to:
- store the transmitted name and the transmitted identification information,
- when one person or group of people is identified in the detection range (E), determine on the basis of the stored identification information whether the person or group of people has already been assigned a name,
- assign a unique name to the person (P) or group of people and transmit this together with the identification information to the other luminaire (L) if the person is not yet assigned a name, and
- transmit the already assigned or the new name to the other luminaire (L).

8. Method for controlling the light color of the light emitted by at least one luminaire, comprising the steps of:
Generating a color signal starting from at least one target object (O) illuminated by the luminaire (L) with a color sensor (S), and
Assigning a target object light color to a color value displayed by the color signal, and
Controlling the light color of the light emitted by the luminaire (L) on the basis of the target object light color,
**characterized by**
ascertaining the presence of a foreign object (P) in the detection range (E) of the color sensor (S) on the basis of a change in the color signal, and
suppressing a change in the light color when the presence of a foreign object (P) has been ascertained, wherein
for ascertaining the presence of the foreign object (P), the temporal course of color changes in the color signal output by the color sensor (S) is analyzed and there is a determination of whether the color value again, within a specific time, assumes a color value, on the basis of which a currently set light color has been ascertained; and/or there is a determination that no foreign object (P) is located in the detection range (E) when changes in the color value do not exceed a specific threshold value for a specific period of time; and/or
foreign objects (P), in particular people, having different colors and/or color patterns are identified on the basis of the color signal, wherein a specific color value and/or one or more specific color value changes are assigned to one person or group of people.

## Revendications

1. Dispositif pour la commande de la couleur de la lumière émise par au moins un luminaire (L), présentant
au moins un capteur de couleur (S), lequel est conçu pour générer un signal de couleur à partir d'au moins un objet cible (O) éclairé par le luminaire (L1 ..L4), et
un dispositif de commande (3), lequel est conçu pour associer une couleur de lumière à la valeur de couleur du signal de couleur et pour commander le luminaire (L) sur la base de la couleur de lumière associée,
**caractérisé en ce que**
le dispositif de commande (3) est conçu pour déterminer la présence d'un objet étranger (P) dans la zone de détection (E) du capteur de couleur (S) sur la base d'une modification du signal de couleur et pour supprimer une modification de la couleur de lumière lorsque la présence d'un objet étranger (P) a été déterminée,
le dispositif de commande (3) étant conçu pour analyser, pour la détermination de la présence de l'objet étranger (P), le tracé temporel des modifications de couleur dans le signal de couleur émis par le capteur de couleur (S) et pour déterminer si la valeur de couleur dans une période déterminée reprend une valeur de couleur sur la base de laquelle une couleur de lumière actuellement définie a été déterminée ; et/ou
le dispositif de commande (3) étant conçu pour déterminer qu'aucun objet étranger (P) ne se trouve dans la zone de détection (E) lorsque, pendant une période de temps déterminée, les modifications de la valeur de couleur ne dépassent pas une valeur de seuil déterminée ; et/ou
le dispositif de commande (3) étant conçu pour identifier des objets étrangers (P), en particulier des personnes, ayant des couleurs et/ou des motifs de couleurs différents sur la base du signal de couleur, une valeur de couleur déterminée et/ou une ou plusieurs modifications de valeur de couleur déterminées étant associée(s) à une personne ou à un groupe de personnes.

2. Dispositif selon la revendication 1, dans lequel
le capteur de couleur (S) est un capteur de couleur qui n'est pas un capteur d'imagerie.

3. Dispositif selon la revendication 1 ou 2, dans lequel
le dispositif de commande (3) est conçu pour définir la période de temps et/ou la valeur de seuil en fonction de l'heure et/ou du jour de la semaine.

4. Dispositif selon l'une quelconque des revendications 1 à 3,
le dispositif (1) présentant au moins un deuxième capteur de couleur (S) ou un dispositif (4) pour la réception d'un signal de couleur généré par un deuxième capteur de couleur (S),
la zone de détection (E) du premier capteur de couleur (S) et la zone de détection (E) du deuxième capteur de couleur (S) étant au moins partiellement différentes ; et
le dispositif de commande (3) étant conçu pour déterminer le mouvement d'une personne ou d'un groupe de personnes sur la base de l'apparition temporelle d'une valeur de couleur et/ou d'une modification de valeur de couleur dans les zones de détection (E).

5. Dispositif selon l'une quelconque des revendications 1 à 4, dans lequel
le dispositif de commande (3) est conçu pour identifier plusieurs personnes ou groupes de personnes et pour associer un nom unique à chaque personne ou groupe de personnes identifié(e).

6. Système d'éclairage comprenant au moins deux luminaires, dans lequel
chaque luminaire (L) présente un dispositif (1) selon la revendication 5 pour la commande de la couleur de la lumière émise par le luminaire (L) et le dispositif de commande (3) de l'un luminaire (L) est conçu pour transmettre à l'autre luminaire (L) le nom et/ou une information pour l'identification de la personne (P) ou du groupe de personnes associé(e) au nom.

7. Système d'éclairage selon la revendication 6, dans lequel
l'information d'identification indique la valeur de couleur et/ou la modification de valeur de couleur ou les modifications de valeur de couleur et chaque luminaire (L) est conçu pour :
- enregistrer le nom transmis et l'information d'identification transmise,
- déterminer, à l'identification d'une personne ou d'un groupe de personnes dans la zone de détection (E), sur la base de l'information d'identification enregistrée, si un nom est déjà associé à la personne ou au groupe de personnes,
- associer un nom unique à la personne (P) ou au groupe de personnes et transmettre celui-ci conjointement avec l'information d'identification à l'autre luminaire (L), lorsqu'aucun nom n'est encore associé à la personne et
- transmettre le nom déjà associé ou le nouveau nom à l'autre luminaire (L).

8. Procédé pour la commande de la couleur de la lumière émise par au moins un luminaire, comprenant les étapes de :
génération d'un signal de couleur à partir d'au moins un objet cible (O) éclairé par le luminaire (L) au moyen d'un capteur de couleur (S) et
association d'une couleur de lumière de l'objet cible à une valeur de couleur indiquée par le signal de couleur et
commande de la couleur de la lumière émise par le luminaire (L) sur la base de la couleur de lumière de l'objet cible,
**caractérisé par**
la détermination de la présence d'un objet étranger (P) dans la zone de détection (E) du capteur de couleur (S) sur la base d'une modification du signal de couleur et
la suppression d'une modification de la couleur de lumière lorsque la présence d'un objet étranger (P) a été déterminée, où,
pour la détermination de la présence de l'objet étranger (P), le tracé temporel des modifications de couleur dans le signal de couleur émis par le capteur de couleur (S) est analysé et on détermine si la valeur de couleur reprend, dans une période de temps déterminée, une valeur de couleur sur la base de laquelle la couleur de lumière actuellement réglée a été déterminée ; et/ou on détermine qu'aucun objet étranger (P) ne se trouve dans la zone de détection (E) lorsque, pendant une période de temps déterminée, les modifications de la valeur de couleur ne dépassent pas une valeur de seuil déterminée ; et/ou
des objets étrangers (P), en particulier des personnes, ayant des couleurs et/ou des motifs de couleurs différent(e)s sont identifiés sur la base du signal de couleur, une valeur de couleur déterminée et/ou une ou plusieurs modifications de valeur de couleur déterminées étant associée(s) à une personne ou à un groupe de personnes.
